# EUROPEAN PATENT APPLICATION

(11) **EP 4 729 333 A1**
(43) Date of publication of application: **22.04.2026**
(21) Application number: 24822492.5
(22) Date of filing: 20.05.2024
(51) Int. Cl.: B60L 3/04, B60R 16/023

(54) **VEHICLE COLLISION SAFETY PROTECTION SYSTEM AND METHOD, AND VEHICLE AND MEDIUM**

(30) Priority: 16.06.2023 CN 202310723142
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: ZHAO, Yifeng, Ningbo, Zhejiang 315899 (CN); WANG, Fangfang, Ningbo, Zhejiang 315899 (CN); GUAN, Bicong, Ningbo, Zhejiang 315899 (CN); HE, Zhihua, Ningbo, Zhejiang 315899 (CN); LI, Jintao, Ningbo, Zhejiang 315899 (CN); ZHANG, Hui, Ningbo, Zhejiang 315899 (CN); YANG, Tiantian, Ningbo, Zhejiang 315899 (CN)
(74) Representative: Range, Christopher William
(86) International application number: PCT/CN2024/094307
(87) International publication number: WO 2024/255540

(57) **Abstract**

A vehicle collision safety protection system and method, and a vehicle and a medium. The vehicle collision safety protection system comprises: a first protection switch unit, which is arranged in a high-voltage loop of a traction battery; a second protection switch unit, which is connected in series to a positive electrode of the traction battery; at least one collision detection unit, which is used for detecting whether a collision occurs at a vehicle; and a control unit, which is used for controlling, when a collision occurs at the vehicle, the second protection switch unit to turn off and the first protection switch unit to turn off, so as to perform dual protection.

## Description

### CROSS-REFERENCE TO RELATED APPLICATIONS

This application claims priority to Chinese patent application No. 202310723142.X, titled "VEHICLE COLLISION SAFETY PROTECTION SYSTEM AND METHOD, AND VEHICLE AND MEDIUM" and filed on June 16, 2023, the entire contents of which are incorporated herein by reference.

### FIELD

The present disclosure relates to the field of vehicle safety technologies, and more particularly, to a vehicle collision safety protection system and method, a vehicle, and a medium.

### BACKGROUND

In the related art, safety is ensured by cutting off a high-voltage relay when a vehicle is involved in a collision. However, if the high-voltage relay malfunctions, the high-voltage relay may fail to be disconnected successfully, posing a threat to vehicle safety.

### SUMMARY

The present disclosure aims to solve at least one of the technical problems in the related art. To this end, an objective of the present disclosure is to provide a vehicle collision safety control and protection system, a method, a vehicle, and a medium that can cut off high voltage of a vehicle when the vehicle is involved in a collision.

According to an embodiment of the present disclosure, the vehicle collision safety control and protection system includes: a first protection switch unit disposed in a high-voltage circuit of a power battery; a second protection switch unit connected in series to a positive electrode of the power battery; at least one collision detection unit configured to detect whether a vehicle is involved in a collision; and a control unit configured to control the second protection switch unit to be disconnected and the first protection switch unit to be disconnected when the vehicle is involved in the collision, to provide dual protection.

In the above solutions, the second protection switch unit is an intelligent fuse. The intelligent fuse includes a pyrotechnic ignition portion, a drive portion, and a cut-off portion. The intelligent fuse is configured to ignite, when the intelligent fuse receives a disconnection command sent by the control unit, an interior of the pyrotechnic ignition portion, to drive the drive portion to move quickly, causing the cut-off portion to cut off a copper bar.

In the above solutions, the first protection switch unit includes: a main positive relay connected in series to the second protection switch unit; and a main negative relay connected in series to a negative electrode of the power battery. The control unit is further configured to control both the main positive relay and the main negative relay to be disconnected when the vehicle is involved in the collision, to cause the high-voltage circuit to be disconnected.

In the above solutions, the collision detection unit includes a first collision detection unit and a second collision detection unit. The first collision detection unit includes a first collision sensor, and an airbag controller configured to transmit, when the first collision sensor detects that the vehicle is involved in the collision, collision information to the control unit. The second collision detection unit includes a second collision sensor configured to transmit, when the second collision sensor detects that the vehicle is involved in the collisio, a collision signal to the control unit. The control unit is configured to determine that the vehicle is involved in the collision when receiving at least one of the collision information and the collision signal.

According to an embodiment of the present disclosure, a vehicle is provided. The vehicle includes any one of the above vehicle collision safety protection system.

According to an embodiment of the present disclosure, a vehicle collision safety control and protection method is provided. A vehicle includes a first protection switch unit, a power battery, and a second protection switch unit. The first protection switch unit is disposed in a high-voltage circuit of the power battery, and the second protection switch unit is connected in series to a positive electrode of the power battery. The method includes: detecting whether the vehicle is involved in a collision; when it is detected that the vehicle is involved in the collision, controlling the second protection switch unit to be disconnected, and controlling the first protection switch unit to be disconnected, to provide dual protection.

In the above solutions, the second protection switch unit is an intelligent fuse. The intelligent fuse includes a pyrotechnic ignition portion, a drive portion, and a cut-off portion. The controlling the second protection switch unit to be disconnected includes: triggering an ignition signal, and igniting, based on the ignition signal, an interior of pyrotechnic ignition portion to drive the drive portion to move quickly, causing the cut-off portion to cut off a copper bar.

In the above solutions, the first protection switch unit includes a main positive relay and a main negative relay. The main positive relay is connected in series to the second protection switch unit, and the main negative relay is connected in series to a negative electrode of the power battery. The controlling the first protection switch unit to be disconnected includes: controlling both the main positive relay and the main negative relay to be disconnected, to cause the high-voltage circuit to be disconnected.

In the above solutions, the detecting whether the vehicle is involved in the collision includes: detecting, by a first collision sensor, whether the vehicle is involved in the collision, to receive collision information transmitted by an airbag controller, the airbag controller being connected to the first collision sensor; detecting, by a second collision sensor, whether the vehicle is involved in the collision, to receive a collision signal transmitted by the second collision sensor; and determining whether the vehicle is involved in the collision based on at least one of the collision information and the collision signal.

According to an embodiment of the present disclosure, a computer-readable storage medium is provided. The computer-readable storage medium has a computer program stored thereon. The computer program, when executed by a processor, implements operations of the above vehicle collision safety protection method.

According to the vehicle collision safety control and protection system, the method, the vehicle, and the medium of the embodiments of the present disclosure, when it is detected that the vehicle is involved in the collision, the first protection switch unit and the second protection switch unit can be controlled to be disconnected simultaneously. In case one of the disconnection methods fails, the other disconnection method can still achieve a purpose of cutting off the high voltage of the vehicle, which improves a success rate of high-voltage cutoff, ensuring the vehicle safety.

Additional aspects and advantages of the present disclosure will be provided in part in the following description, or will in part become apparent from the following description or be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a control block diagram of a vehicle collision safety protection system according to an embodiment.
FIG. 2 is an electrical schematic diagram of a vehicle collision safety protection system according to an embodiment.
FIG. 3 is a schematic flowchart of a vehicle collision safety protection method according to an embodiment.
FIG. 4 is a schematic flowchart of a vehicle collision safety protection method according to another embodiment.
FIG. 5 is a schematic flowchart of a vehicle collision safety protection method according to another embodiment.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

Implementation details of technical solutions of the embodiments of the present disclosure are described in detail below.

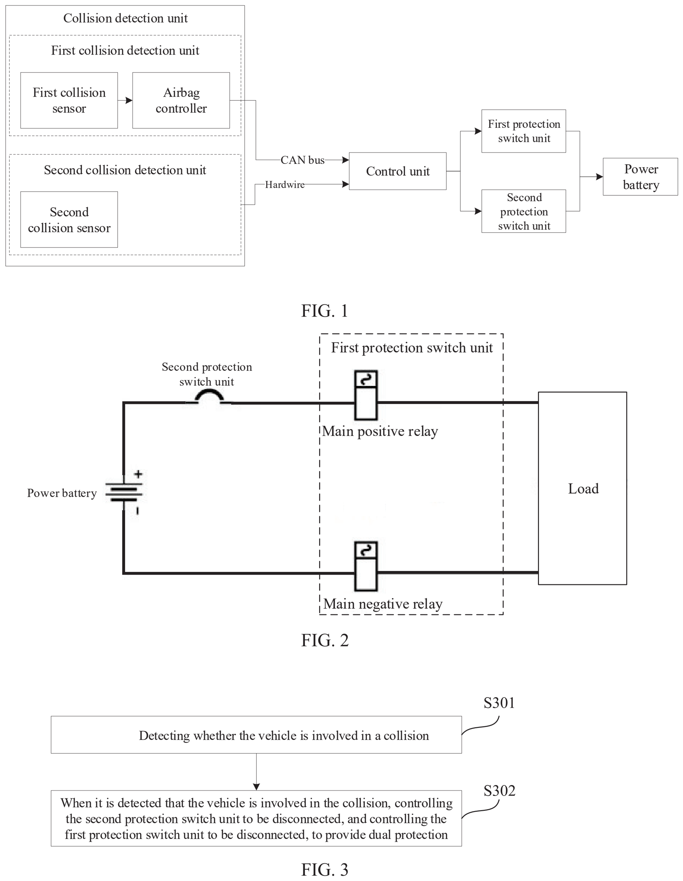

As illustrated in FIG. 1, FIG. 1 provides a control block diagram of a vehicle collision safety protection system. Working principle of the vehicle collision safety protection system is described in detail below in conjunction with FIG. 1.

In an embodiment, the vehicle collision safety protection system includes a first protection switch unit, a second protection switch unit, at least one collision detection unit, and a control unit.

The first protection switch unit is disposed in a high-voltage circuit of a power battery. Therefore, in a case where the first protection switch unit is disconnected, the high-voltage circuit of the power battery may be cut off to prevent the power battery from continuing to provide a high-voltage output to a vehicle end.

The second protection switch unit is disposed at a positive electrode of the power battery, and is connected in series to the positive electrode of the power battery. Therefore, in a case where the second protection switch unit is disconnected, a positive electrode output of the power battery may be cut off.

As illustrated in FIG. 2, FIG. 2 illustrates an electrical schematic diagram of the vehicle collision safety protection system. In FIG. 2, a positive output terminal of the power battery is connected to the second protection switch unit, and the first protection switch unit is connected to the high-voltage circuit of the power battery. In an exemplary embodiment of the present disclosure, an input terminal of the first protection switch unit is connected to the second protection switch unit, and an output terminal of the first protection switch unit is connected to a negative electrode of the power battery, in such a manner that the second protection switch unit is placed at an inner side of the first protection switch unit. It should be noted that, a position adjacent to the power battery is referred to as the inner side, and a position away from the power battery is referred to as an outer side. In the electrical schematic diagram illustrated in FIG. 2, a position where the second protection switch unit is connected to the circuit is closer to the power battery than a position where the first protection switch unit is connected to the circuit.

At least one collision detection unit can detect whether a vehicle is involved in a collision by using different sensors. Exemplarily, a three-axis acceleration sensor can detect changes in real-time acceleration of the vehicle, to detect whether the vehicle is involved in the collision. In actual applications, to avoid situations where the collision detection unit falsely detects a vehicle collision or fails to detect whether the vehicle in involved in the collision due to a fault in the collision detection unit, a plurality of collision detection units may further be provided, to improve detection accuracy of the vehicle collision.

A control unit controller is essentially a battery management system (BMS). Main functions of the BMS are to improve a utilization rate of the power battery, prevent the power battery from being over-charged and over-discharged, extend a service life of the power battery, and monitor a battery status. The BMS can be a system for managing, controlling, and using the power battery.

In this embodiment, the control unit is configured to receive information detected by the collision detection unit, in such a manner that the control unit can control the first protection switch unit and the second protection switch unit to be disconnected when the vehicle is involved in the collision. By controlling the first protection switch unit and the second protection switch unit to be disconnected, a purpose of disconnecting the high voltage can be achieved, ensuring safety of the vehicle after the collision. For example, timely disconnecting the high voltage of the vehicle can prevent the power battery of the vehicle from being damaged and causing an accident. In actual applications, the first protection switch unit and the second protection switch unit have different structures. Therefore, a disconnection mode and an operation method of the first protection switch unit and the second protection switch unit are also different, which results in different failure conditions of the first protection switch unit and the second protection switch unit. Therefore, when the first protection switch unit is facing a failure, the high voltage can be disconnected through the second protection switch unit; and when the second protection switch unit is facing a failure, the high voltage can be disconnected through the first protection switch unit. Thus, in this embodiment, the first protection switch unit and the second protection switch unit are controlled to be disconnected simultaneously, and dual protection can be provided. In this way, when one of the protection switch units cannot be disconnected, the purpose of disconnecting the high voltage can also be achieved by disconnecting the other protection switch unit, ensuring that the vehicle can successfully disconnect the high voltage in the event of the collision.

In an embodiment, the second protection switch unit is an intelligent fuse. The intelligent fuse includes a pyrotechnic ignition portion, a drive portion, and a cut-off portion. When the control unit determines that the second protection switch unit needs to be disconnected, the control unit sends a disconnection command to the second protection switch unit. When the intelligent fuse receives the disconnection command sent by the control unit, the intelligent fuse ignites an interior of the pyrotechnic ignition portion. When the interior of the pyrotechnic ignition portion is ignited, a large pressure will be generated. The generated pressure can push the drive portion to move quickly. During movement of the drive portion, the cut-off portion can cut a copper bar back and forth and cut off the copper bar, in such a manner the high-voltage circuit can be cut off, and the power supply from the power battery to the vehicle end can be stopped.

In an embodiment, the first protection switch unit is a high-pressure relay. The first protection switch unit includes a main positive relay and a main negative relay. The main positive relay is connected in series to the second protection switch unit, and is located at a positive electrode side of the power battery. That is, one end of the second protection switch unit is connected to the output terminal of the positive electrode of the power battery, the other end of the second protection switch unit is connected to the main positive relay, and the main positive relay is configured to control a charging and discharging process of the power battery. The main negative relay is connected in series to a negative electrode of the power battery for controlling grounding of the negative electrode of the power battery, thereby ensuring a safe operation of a battery pack.

In actual applications, when control circuits of the main positive relay and the main negative relay are energized, coils of the main positive relay and the main negative relay are excited by current to produce a magnetic field. The generated magnetic field magnetizes the iron cores in the main positive relay and the main negative relay, attracting contacts. Also, a spring among the contacts is compressed, and finally the contacts close, enabling the main positive relay and the main negative relay to be conducted and provide high-pressure power supply for the vehicle end. When the vehicle is involved in the collision, the control unit is configured to cut off a power supply of the control circuit, causing the coils of the main positive relay and the main negative relay to lose excitation, the magnetic field to dissipate, the spring among the contacts to return to an original state, and the contacts to open. In this way, the main positive relay and the main negative relay are both disconnected, disconnecting the high-voltage circuit, and stopping a supply of high-voltage power to the vehicle end.

In actual applications, the main positive relay and the main negative relay are prone to adhesion failure due to overcurrent and overheating, resulting in the main positive relay and the main negative relay being unable to be disconnected in time, or requiring a long time to be disconnected. In this case, the control unit is further configured to control the second protection switch unit to be disconnected to achieve a same effect of disconnecting the high voltage.

In an embodiment, the collision detection unit includes a first collision detection unit and a second collision detection unit. The first collision detection unit includes a first collision sensor and an airbag controller. The first collision sensor is configured to detect whether the vehicle is involved in the collision and transmit collision information to the airbag controller. The airbag controller is configured to control deployment of the airbag based on the collision information. Exemplarily, the airbag controller controls the deployment of the airbag when it is determined that the vehicle is involved in the collision based on the collision information, and controls the airbag to not deploy when it is determined that the vehicle is not involved in the collision based on the collision information. In addition, when the first collision sensor detects that the vehicle is involved in the collision, the airbag controller is further configured to transmit the collision information to the control unit via a controller area network (CAN) bus, causing the control unit to control the first protection switch unit and second protection switch unit to be disconnected based on the collision information.

The second collision detection unit includes a second collision sensor configured to detect whether the vehicle is involved in the collision. When the second collision sensor detects that the vehicle is involved in the collision, the second collision sensor transmits a collision signal to the control unit, and the control unit is configured to control the first protection switch unit and the second protection switch unit to be disconnected based on the collision signal.

The control unit is configured to determine, based on a collision situation of the vehicle, whether the first protection switch unit and the second protection switch unit needs to be controlled to be disconnected. In this embodiment, the control unit may receive the collision information transmitted by the airbag controller and may also receive the collision signal transmitted by the second collision detection unit. When the control unit receives at least one of the collision information and the collision signal, the vehicle is determined to be involved in the collision, and the first protection switch unit and the second protection switch unit are controlled to be disconnected.

In the above embodiments, the vehicle collision safety protection system is provided with a total of two protection switch units. When the vehicle is involved in the collision, the two protection switch units may be controlled to be disconnected simultaneously, in such a manner that when one of the protection switch units cannot be successfully disconnected, the high voltage can be cut off by disconnecting the other protection switch unit, ensuring the vehicle safety.

The present disclosure further provides a vehicle. The vehicle is provided with the vehicle collision safety protection system.

The present disclosure further provides a vehicle collision safety protection method. The method is applied to the vehicle. As illustrated in FIG. 3, FIG. 3 illustrates a schematic flowchart of the vehicle collision safety protection method. The vehicle collision safety protection method includes the following operations.

At block S301, it is detected that whether the vehicle is involved in the collision.

A collision sensor on the vehicle can be used to detect whether the vehicle is involved in the collision. For example, the three-axis acceleration sensor can detect changes in the real-time acceleration of the vehicle, to detect whether the vehicle is involved in the collision.

At block S302, when it is detected that the vehicle is involved in the collision, the second protection switch unit is controlled to be disconnected, and the first protection switch unit is controlled to be disconnected, to provide the dual protection.

The vehicle includes the first protection switch unit, the second protection switch unit, and the power battery. The collision of the vehicle may easily cause the power battery of the vehicle to be squeezed or damaged, which may cause the power battery of the vehicle to cause a fire, etc., posing a threat to the vehicle safety. Based on this, when it is determined that the vehicle is involved in the collision, the first protection switch unit and the second protection switch unit are controlled to be disconnected.

In actual applications, the first protection switch unit and the second protection switch unit have different structures. Therefore, the disconnection mode and the operation method of the first protection switch unit and the second protection switch unit are also different, which results in different failure conditions of the first protection switch unit and the second protection switch unit. Therefore, when the first protection switch unit is facing a failure, the high voltage can be disconnected through the second protection switch unit; and when the second protection switch unit is facing a failure, the high voltage can be disconnected through the first protection switch unit. Thus, in this embodiment, the first protection switch unit and the second protection switch unit are controlled to be disconnected simultaneously, and the dual protection can be provided. In this way, when one of the protection switch units cannot be disconnected, the purpose of disconnecting the high voltage can also be achieved by disconnecting the other protection switch unit, ensuring that the vehicle can successfully disconnect the high voltage in the event of the collision.

It should be noted that, a connection relationship among the first protection switch unit, the second protection switch unit, and the power battery refers to the electrical schematic diagram of the vehicle collision safety protection system illustrated in FIG. 2. In an exemplary embodiment of the present disclosure, the first protection switch unit is disposed in the high-voltage circuit of the power battery, and the second protection switch unit is connected in series to the output terminal of the positive electrode of the power battery. The second protection switch unit is located at the inner side of the first protection switch unit. It should be noted that, the position adjacent to the power battery is referred to as the inner side, and the position away from the power battery is referred to as the outer side. In the electrical schematic diagram illustrated in FIG. 2, the position where the second protection switch unit is connected to the circuit is closer to the power battery than the position where the first protection switch unit is connected to the circuit.

In an embodiment, the second protection switch unit is the intelligent fuse. The intelligent fuse includes the pyrotechnic ignition portion, the drive portion, and the cut-off portion. When it is detected that the vehicle is involved in the collision, the disconnection command is sent to the intelligent fuse. When the intelligent fuse receives the disconnection command sent by the control unit, the intelligent fuse triggers the ignition signal, and ignites the interior of the pyrotechnic ignition portion based on the ignition signal. When the interior of the pyrotechnic ignition portion is ignited, the large pressure will be generated. The generated pressure can push the drive portion to move quickly. During the movement of the drive portion, the cut-off portion can cut off the copper bar, in such a manner the high-voltage circuit can be cut off, and the power supply from the power battery to the vehicle end can be stopped.

In an embodiment, the first protection switch unit is the high-pressure relay. The high-pressure relay includes the main positive relay and the main negative relay. The second protection switch unit is the intelligent fuse. The intelligent fuse includes the pyrotechnic ignition portion, the drive portion, and the cut-off portion. As illustrated in FIG. 2, the main positive relay is connected in series to the second protection switch unit, and the main negative relay is connected in series to the negative electrode of the power battery. In actual applications, when the control circuits of the main positive relay and the main negative relay are energized, the coils of the main positive relay and the main negative relay are excited by current to produce the magnetic field. The generated magnetic field magnetizes the iron cores in the main positive relay and the main negative relay, attracting the contacts. Also, the spring among the contacts is compressed, and finally the contacts close, enabling the main positive relay and the main negative relay to be conducted and provide high-pressure power supply for the vehicle end. When the vehicle is involved in the collision, the control unit is configured to cut off the power supply of the control circuit, causing the coils of the main positive relay and the main negative relay to lose excitation, the magnetic field to dissipate, the spring among the contacts to return to the original state, and the contacts to open. In this way, the main positive relay and the main negative relay are both disconnected, disconnecting the high-voltage circuit, and stopping the supply of high-voltage power to the vehicle end.

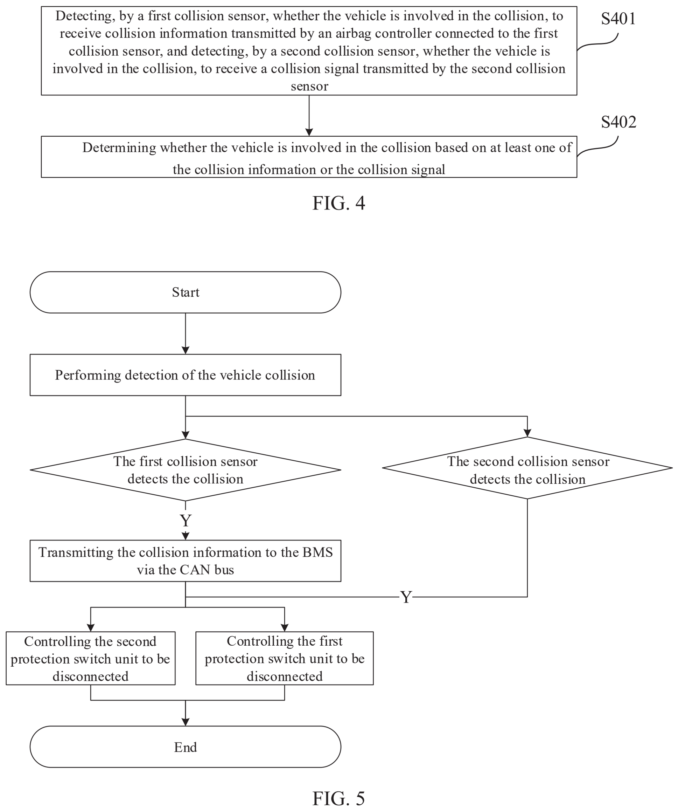

In an embodiment, as illustrated in FIG. 4, the detecting whether the vehicle is involved in the collision includes the following operations.

At block S401, it is detected by the first collision sensor whether the vehicle is involved in the collision, to receive the collision information transmitted by the airbag controller connected to the first collision sensor, and it is detected by the second collision sensor whether the vehicle is involved in the collision, to receive the collision signal transmitted by the second collision sensor.

In this embodiment, the collision sensor is used to detect whether the vehicle is involved in the collision. The vehicle is provided with two collision sensors. Operation of the two collision sensors will be described in detail below.

The first collision sensor is configured to detect whether the vehicle is involved in the collision and transmit the collision information to the airbag controller. Upon receiving the collision information, the airbag controller controls the airbag based on the collision information. In an exemplary embodiment of the present disclosure, when the airbag controller determines that the vehicle is involved in the collision based on the collision information, the airbag controller controls the deployment of the airbag. In addition, the airbag controller is further configured to transmit the collision information via the CAN bus, enabling the control unit to control the first protection switch unit and second protection switch units to be disconnected based on the collision information.

The second collision sensor is also configured to detect whether the vehicle is involved in the collision. The second collision sensor and the control unit are connected via a hard wire, and the second collision sensor is configured to directly transmit the collision signal to the control unit, enabling the control unit to control the first protection switch unit and the second protection switch unit to be disconnected based on the collision signal.

Therefore, in this embodiment, it is determined that whether the vehicle is involved in the collision based on the collision information detected by the first collision sensor. It is also determined that whether the vehicle is involved in the collision based on the collision signal detected by the second collision sensor. The two collision sensors are provided, which can improve accuracy of vehicle collision detection, and prevent power supply of a normally operating vehicle from being disconnected due to a detection error.

At block S402, it is determined that whether the vehicle is involved in the collision based on at least one of the collision information or the collision signal.

Upon receiving the collision information and the collision signal, it is determined that whether the vehicle is involved in the collision based on at least one of the collision information or the collision signal. In an exemplary embodiment, when the collision information and the collision signal both indicate that the vehicle is involved in the collision, it is determined that the vehicle is involved in the collision; when one of the collision information and the collision signal indicates that the vehicle is involved in the collision, and the other of the collision information and the collision signal indicates that the vehicle is not involved in the collision, a detection result may be re-obtained through the first collision sensor or the second collision sensor. In another possible implementation, when the collision information and the collision signal are different, the collision information detected by the first collision sensor may be used as a basis. This is because the airbag controller needs to control the deployment of the airbag based on the collision information. Therefore, it is considered that the collision information detected by the first collision sensor has higher accuracy.

In actual applications, subsequent to cutting off the high voltage through the first protection switch unit or the second protection switch unit, a collision fault of the vehicle may further be reported.

In an embodiment, as illustrated in FIG. 5, FIG. 5 illustrates a schematic flowchart of the vehicle collision safety protection method.

At block 1, detection of the vehicle collision is performed. Collision detection is performed using the first collision sensor and the second collision sensor to determine whether the vehicle is involved in the collision.

At block 2, it is determined that whether the first collision sensor has detected the vehicle collision.

At block 3, it is determined that whether the second collision sensor has detected the vehicle collision. If the second sensor detects the vehicle collision, block 5 and block 6 are executed.

At block 4, when the first collision sensor detects that the vehicle is involved in the collision, the collision information is transmitted to the BMS via the CAN bus.

At block 5, the second protection switch unit is controlled to be disconnected.

At block 6, the first protection switch unit is controlled to be disconnected.

In the above embodiments, when it is detected that the vehicle is involved in the collision, the first protection switch unit is controlled to be disconnected, and the first protection switch unit is controlled to be disconnected, in such a manner that when one of the protection switch units fails, the high voltage can be cut off through the other protection switch unit, providing the dual protection for the vehicle.

It should be noted that, the logic and/or step described in other manners herein or shown in the flowchart, e.g., a particular sequence table of executable instructions for realizing the logical function, may be specifically achieved in any computer-readable medium to be used by an instruction execution system, apparatus or device (such as a system based on computers, a system including a processing module, or other systems capable of obtaining instructions from the instruction execution system, apparatus and device and executing the instructions), or to be used in combination with the instruction execution system, apparatus and device. As to the specification, "the computer-readable storage medium" may be any apparatus adaptive for including, storing, communicating, propagating or transferring programs to be used by or in combination with the instruction execution system, apparatus or device. More specific examples of the computer-readable medium comprise but are not limited to: an electronic connection (an electronic apparatus) with one or more wires, a portable computer enclosure (a magnetic apparatus), a random access memory (RAM), a read only memory (ROM), an erasable programmable read-only memory (EPROM or a flash memory), an optical fiber apparatus, and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

In addition, terms such as "first" and "second" are used herein for purposes of description and are not intended to indicate or imply relative importance, or to implicitly show the number of technical features indicated. Thus, the feature defined with "first" and "second" may explicitly or implicitly include one or more this feature. In the description of the present disclosure, "a plurality of" means two or more, unless specified otherwise.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. A vehicle collision safety protection system, comprising:
a first protection switch unit disposed in a high-voltage circuit of a power battery;
a second protection switch unit connected in series to a positive electrode of the power battery;
at least one collision detection unit configured to detect whether a vehicle is involved in a collision; and
a control unit configured to control the second protection switch unit to be disconnected and the first protection switch unit to be disconnected when the vehicle is involved in the collision, to provide dual protection.

2. The vehicle collision safety protection system according to claim 1, wherein the second protection switch unit is an intelligent fuse, the intelligent fuse comprising a pyrotechnic ignition portion, a drive portion, and a cut-off portion; and
wherein the intelligent fuse is configured to ignite, when the intelligent fuse receives a disconnection command sent by the control unit, an interior of the pyrotechnic ignition portion, to drive the drive portion to move quickly, causing the cut-off portion to cut off a copper bar.

3. The vehicle collision safety protection system according to claim 1 or 2, wherein the first protection switch unit comprises:
a main positive relay connected in series to the second protection switch unit; and
a main negative relay connected in series to a negative electrode of the power battery, and
wherein the control unit is further configured to control both the main positive relay and the main negative relay to be disconnected when the vehicle is involved in the collision, to cause the high-voltage circuit to be disconnected.

4. The vehicle collision safety protection system according to any one of claims 1 to 3, wherein the collision detection unit comprises:
a first collision detection unit comprising a first collision sensor and an airbag controller, wherein the airbag controller is configured to transmit, when the first collision sensor detects that the vehicle is involved in the collision, collision information to the control unit; and
a second collision detection unit comprising a second collision sensor, wherein the second collision sensor is configured to transmit, when the second collision sensor detects that the vehicle is involved in the collision, a collision signal to the control unit, and
wherein the control unit is configured to determine that the vehicle is involved in the collision when receiving at least one of the collision information and the collision signal.

5. A vehicle, comprising the vehicle collision safety protection system according to any one of claims 1 to 4.

6. A vehicle collision safety protection method, wherein:
a vehicle comprises a first protection switch unit, a power battery, and a second protection switch unit, wherein the first protection switch unit is disposed in a high-voltage circuit of the power battery, and the second protection switch unit is connected in series to a positive electrode of the power battery; and
the method comprises:
detecting whether the vehicle is involved in a collision;
when it is detected that the vehicle is involved in the collision, controlling the second protection switch unit to be disconnected, and controlling the first protection switch unit to be disconnected, to provide dual protection.

7. The vehicle collision safety protection method according to claim 6, wherein:
the second protection switch unit is an intelligent fuse, the intelligent fuse comprising a pyrotechnic ignition portion, a drive portion, and a cut-off portion;
said controlling the second protection switch unit to be disconnected comprises:
triggering an ignition signal, and igniting, based on the ignition signal, an interior of pyrotechnic ignition portion to drive the drive portion to move quickly, causing the cut-off portion to cut off a copper bar.

8. The vehicle collision safety protection method according to claim 6 or 7, wherein:
the first protection switch unit comprises a main positive relay and a main negative relay, the main positive relay being connected in series to the second protection switch unit, and the main negative relay being connected in series to a negative electrode of the power battery; and
said controlling the first protection switch unit to be disconnected comprises:
controlling both the main positive relay and the main negative relay to be disconnected, to cause the high-voltage circuit to be disconnected.

9. The vehicle collision safety protection method according to any one of claims 6 to 8, wherein said detecting whether the vehicle is involved in the collision comprises:
detecting, by a first collision sensor, whether the vehicle is involved in the collision, to receive collision information transmitted by an airbag controller, the airbag controller being connected to the first collision sensor;
detecting, by a second collision sensor, whether the vehicle is involved in the collision, to receive a collision signal transmitted by the second collision sensor; and
determining whether the vehicle is involved in the collision based on at least one of the collision information and the collision signal.

10. A computer-readable storage medium having a computer program stored thereon, wherein the computer program, when executed by a processor, implements the method according to any one of claims 6 to 9.
